(19) Europäisches Patentamt
European Patent Office
Office européen des brevets

(11) **EP 3 944 110 A1**

(12) **EUROPEAN PATENT APPLICATION**

(43) Date of publication:
**26.01.2022 Bulletin 2022/04**

(21) Application number: **21177103.5**

(22) Date of filing: **01.06.2021**

(51) International Patent Classification (IPC):
**G06F 21/55** (2013.01) **H04L 29/06** (2006.01)

(52) Cooperative Patent Classification (CPC):
**G06F 21/552; G06F 21/554; H04L 63/1416;
H04L 63/1425**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.07.2020 JP 2020124664**

(71) Applicant: **FUJITSU LIMITED
Kanagawa 211-8588 (JP)**

(72) Inventors:
• **Oikawa, Takanori**
**Kawasaki-shi, Kanagawa, 211-8588 (JP)**
• **Fujishima, Yuki**
**Kawasaki-shi, Kanagawa, 211-8588 (JP)**

(74) Representative: **Hoffmann Eitle
Patent- und Rechtsanwälte PartmbB
Arabellastraße 30
81925 München (DE)**

(54) **LEARNING PROGRAM, LEARNING DEVICE, AND LEARNING METHOD**

(57) A learning program in which a computer performs processing of generating a first trained model, based on first data to be detected and second data to be undetected, for detecting the first data, specifying information and a data amount of third data that has been detected as the first data among newly input second data by the first trained model, specifying fourth data to be undetected by replacing at least part of the second data with the third data, the at least part of the second data specified according to information of the newly input second data and the data amount of the third data, and generating a second trained model, based on the first data and the fourth data, for detecting the first data.

FIG. 2

**Description**

[Field]

The embodiments discussed herein are related to a learning program, a learning device, and a learning method.

[Background Art]

As a countermeasure against targeted cyberattacks, communication by attackers is sometimes determined. In the determination of attacker communication, for example, next-generation firewalls and intrusion detection system (IDS) monitor communication within a company and communication between the company and outside the company, and alert the communication that seems to be an attacker.

Supervised machine learning is sometimes used to determine communication by an attacker and communication for business use by, for example, deep learning. In the supervised machine learning, a model is generated by learning both communication data by an attacker and communication data for business use, and the communication by an attacker and the communication for business use are determined.

[Citation List]

[Patent Literature]

[PTL 1] US Patent Publication No. 2019/0034836.
[PTL 2] Japanese Laid-open Patent Publication No. 2006-285489.
[PTL 3] Japanese Laid-open Patent Publication No. 7-219921.

[Summary of Invention]

[Technical Problem]

The model may be needed to relearn (in other words, recreate) in response to attacks and changes in business. For example, erroneous determination may be made unless new business communication data is learned in the case where there is a change in the business content.

One aspect is intended to efficiently perform relearning.

[Solution to Problem]

According to one aspect of the embodiments, a learning program in which a computer performs processing of generating a first trained model, based on first data to be detected and second data to be undetected, for detecting the first data, specifying information and a data amount of third data detected as the first data by the first trained model from newly input second data, specifying fourth data to be undetected by replacing the third data with at least part of the second data specified according to information of the newly input second data and the data amount of the third data, and generating a second trained model, based on the first data and the fourth data, for detecting the first data.

[Effects of Invention]

In one aspect, relearning can be efficiently performed.

[Brief Description of Drawings]

FIG. 1 is a diagram for describing learning processing for attack communication data and business communication data in a related example;
FIG. 2 is a diagram for describing learning processing for attack communication data and business communication data in an example of an embodiment;
FIG. 3 is a block diagram schematically illustrating a hardware configuration example of a learning device in an example according to an embodiment;
FIG. 4 is a block diagram schematically illustrating a software configuration example of the learning device illustrated in FIG. 3;
FIG. 5 is a diagram for describing an outlier detection technique used in the learning device illustrated in FIG. 3;
FIG. 6 is a graph illustrating distribution of preliminary training data and trial period data in the learning device illustrated in FIG. 3;
FIG. 7 is a graph for describing a case of randomly selecting replacement data in the graph illustrating distribution of preliminary training data and trial period data illustrated in FIG. 6;
FIG. 8 is a graph for describing a case of selecting replacement data using the outlier detection technique in the graph illustrating distribution of preliminary training data and trial period data illustrated in FIG. 6; and
FIG. 9 is a flowchart illustrating processing of selecting data to be replaced in the learning device illustrated in FIG. 3.

[Description of Embodiments]

[A] Related Example

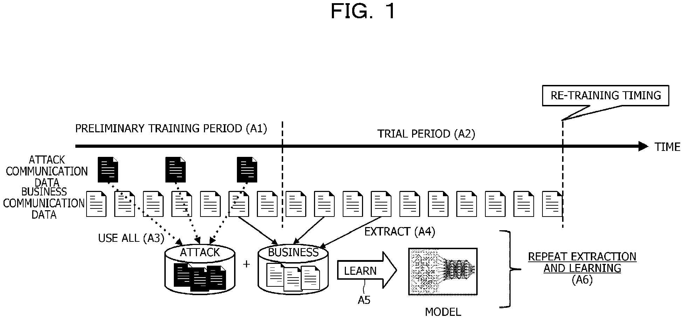

FIG. 1 is a diagram for describing learning processing for attack communication data and business communication data in a related example.

The learning processing may be divided into a preliminary training period represented by reference numeral A1 and a trial period represented by reference numeral A2. The preliminary training period is a period for collecting training data used for a model to be used in a trial period (in other words, a trained model). The trial period is a period from the timing when the preliminary training period ends and use of the model created in the preliminary training period starts to re-training timing.

When the amount of data failed to determine communication data by an attacker (in other words, attack communication data) and communication data for business use (in other words, business communication data) becomes a threshold or higher by the model used in the trial period, the training data may be relearned. Thereby, a new model is created.

Since there is little communication by an attacker, the amount of attack communication data is less than the amount of business communication data. Therefore, the amount of data between the attack communication data and the business communication data may be made uniform so that the determination is not biased during learning. For example, by under sampling, the larger data may be selected according to the amount of the smaller data.

In FIG. 1, all of the attack communication data are used, as illustrated by reference numeral A3. Meanwhile, the same amount of business communication data as the attack communication data is selected, extracted, and used, as illustrated by reference numeral A4.

The extracted attack communication data and business communication data are learned and the model is generated, as illustrated by reference numeral A5.

Then, when the next re-training timing arrives, the performance (for example, accuracy and recall) of the generated model is evaluated, extraction and learning of the training data are repeated according to an evaluation result, and a model with the best performance (in other words, with the highest accuracy rate) is output, as illustrated by reference numeral A6.

Note that, in the evaluation of model performance, reduction of "erroneously determining an attack as a business" (in other words, reduction of missed attacks) may be emphasized. Thereby, a model committed to the safe side is generated.

In the learning processing in the related example illustrated in FIG. 1, selection and learning of data are repeated many times, which may consume a large amount of hardware resources.

[B] Embodiment

[B-1] System Configuration Example

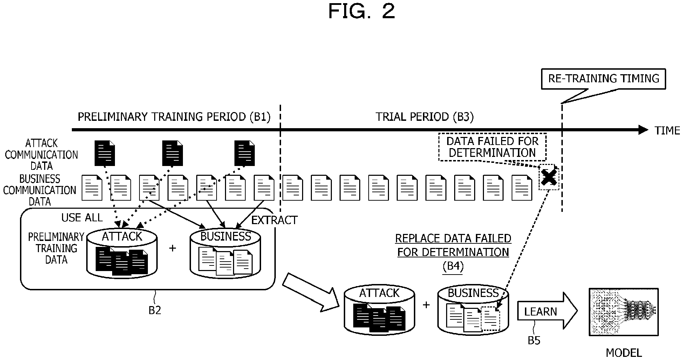

FIG. 2 is a diagram for describing learning processing for attack communication data and business communication data in an example of an embodiment.

In the preliminary training period represented by reference numeral B1, all attack communication data are used and the same number of business communication data as the attack communication data is extracted, and the preliminary training data is generated, as illustrated by reference numeral B2.

In the trial period represented by reference numeral B3, when data failed to determine has occurred, only the data failed for determination in the preliminary training data is replaced, as illustrated by reference numeral B4.

Then, the attack communication data and the business communication data after the data failed for determination is replaced are learned, and a model (in other words, a trained model) is generated, as illustrated by reference numeral B5.

By replacing the data failed for determination with part of the preliminary training data and relearning the preliminary training data, as described above, the preliminary training data having certain performance can be effectively used. Then, in the learning processing illustrated in FIG. 2, it is possible to generate a model having certain performance while reducing the consumption of hardware resources because the learning is performed only once.

However, in a case where the priority of the attack communication data and the business communication data included in the preliminary training data is not specified, the attack communication data or the business communication data that is effective for determination may be replaced with the data failed for determination.

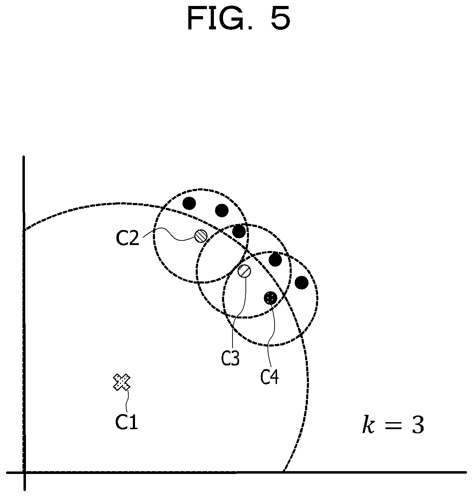

Therefore, in an example of the embodiment, data indicating a most deviating value from the group of the attack communication data or the business communication data effective for determination is specified as data to be replaced, as will be described below with reference to FIG. 5 and the like.

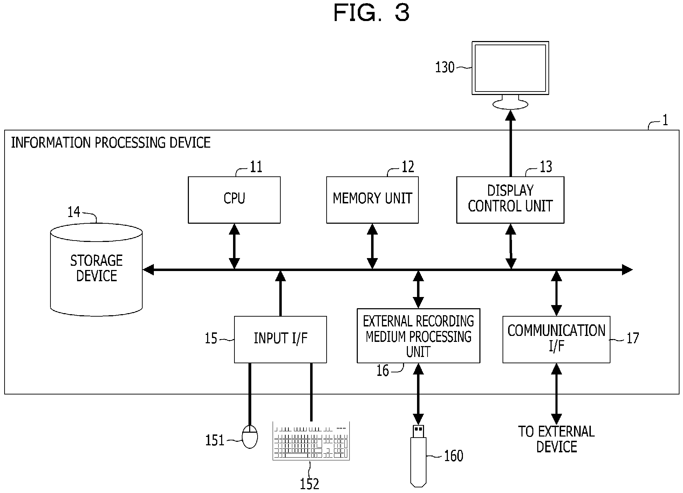

FIG. 3 is a block diagram schematically illustrating a hardware configuration example of the learning device 1 in an example according to the embodiment.

As illustrated in FIG. 3, the learning device 1 includes, for example, a server function, and includes a central processing unit (CPU) 11, a memory unit 12, a display control unit 13, a storage device 14, an input interface (IF) 15, and an external recording medium processing unit 16, and a communication IF 17.

The memory unit 12 is an example of a storage unit, which is, for example, a read only memory (ROM), a random access memory (RAM), or the like. The RAM may be, for example, a dynamic RAM (DRAM). Programs such as a basic input/output system (BIOS) may be written into the ROM of the memory unit 12. A software program in the memory unit 12 may be appropriately read and executed by the CPU 11. Furthermore, the RAM of the memory unit 12 may be used as a temporary recording memory or a working memory.

The display control unit 13 is connected to a display device 130 and controls the display device 130. The display device 130 is a liquid crystal display, an organic light-emitting diode (OLED) display, a cathode ray tube (CRT), an electronic paper display, or the like, and displays various kinds of information for an operator or the like. The display device 130 may be combined with an input device, and may be, for example, a touch panel.

The storage device 14 is a storage device having high input/output (IO) performance and non-volatility, and for example, a solid state drive (SSD), a storage class memory (SCM), or a hard disk drive (HDD) may be used.

The input IF 15 may be connected to an input device such as a mouse 151 and a keyboard 152, and may control the input device such as the mouse 151 and the keyboard 152. The mouse 151 and the keyboard 152 are examples of the input device, and an operator performs various input operations through those input devices.

A recording medium 160 is detachably attached to the external recording medium processing unit 16. The external recording medium processing unit 16 can read information recorded in the recording medium 160 in the state where the recording medium 160 is attached thereto. In the present example, the recording medium 160 is portable. For example, the recording medium 160 is a flexible disk, an optical disk, a magnetic disk, a magneto optical disk, a semiconductor memory, or the like.

The communication IF 17 is an interface for enabling communication with an external device.

The CPU 11 is a processing device that performs various types of control and calculation, and implements various functions by executing an operating system (OS) and programs stored in the memory unit 12 or the like.

A device for controlling operation of the entire learning device 1 is not limited to the CPU 11 and may be, for example, any one of an MPU, a DSP, an ASIC, a PLD, or an FPGA. Furthermore, the device for controlling the operation of the entire learning device 1 may be a combination of two or more of the CPU, the MPU, the DSP, the ASIC, the PLD, or the FPGA. Note that the MPU is an abbreviation for micro processing unit, the DSP is an abbreviation for digital signal processor, and the ASIC is an abbreviation for application specific integrated circuit. Furthermore, the PLD is an abbreviation for programmable logic device, and the FPGA is an abbreviation for field programmable gate array.

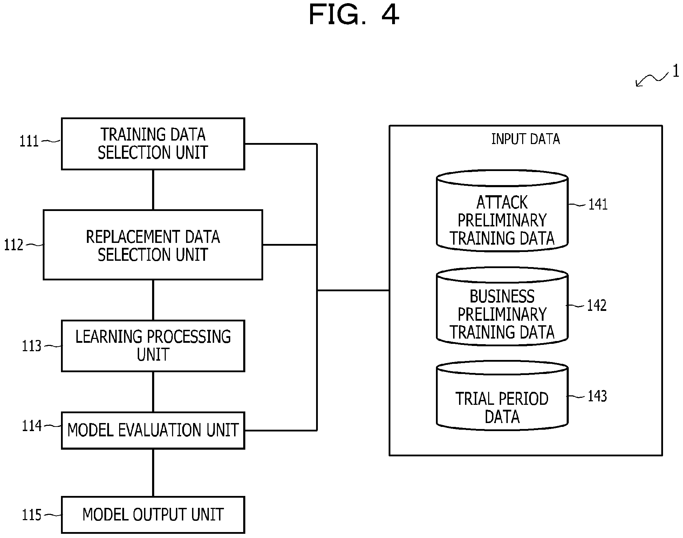

FIG. 4 is a block diagram schematically illustrating a software configuration example of the learning device 1 illustrated in FIG. 3.

As illustrated in FIG. 4, the CPU 11 illustrated in FIG. 3 functions as a training data selection unit 111, a replacement data selection unit 112, a learning processing unit 113, a model evaluation unit 114, and a model output unit 115. Furthermore, the storage device 14 illustrated in FIG. 3 functions as attack preliminary training data 141, business preliminary training data 142, and trial period data 143. At least some information of the attack preliminary training data 141, the business preliminary training data 142, and the trial period data 143 may be read from the storage device 14 and written to the memory unit 12 by the CPU 11.

The attack preliminary training data 141 and the business preliminary training data 142 may be collectively referred to as preliminary training data.

The training data selection unit 111 receives the preliminary training data as input data and selects data to be used for learning from the input data. Specifically, for example, the training data selection unit 111 receives all the attack preliminary training data 141 as inputs and receives the same amount of the business preliminary training data 142 as the attack preliminary training data 141 as inputs during the preliminary training period.

The replacement data selection unit 112 receives the trial period data 143 as input data, and selects data to be replaced with the trial period data 143 from the attack preliminary training data 141 or the business preliminary training data 142. Specifically, for example, in the case where data failed to determine the attack communication data and the business communication data has occurred in the trial period, the replacement data selection unit 112 selects the data to be replaced with the data failed for determination from the attack preliminary training data 141 or the business preliminary training data 142.

When selecting the data to be replaced from the preliminary training data, the replacement data selection unit 112 replaces the preliminary training data having a high degree of deviation with respect to the trial period data 143 in order to leave the preliminary training data similar to the trial period data 143. For the calculation of the degree of deviation, the outlier detection technique (local outlier factor: LOF), the OneClass SVM, the k-nearest neighbor algorithm, the Mahalanobis distance, or the Smart Sifter may be used, for example. Details of the outlier detection technique will be described below with reference to FIG. 5.

In other words, the replacement data selection unit 112 functions as an example of a first specifying unit that specifies information and a data amount of third data detected as first data to be detected by a first trained model, from newly input second data to be undetected.

Furthermore, the replacement data selection unit 112 functions as an example of a second specifying unit that specifies fourth data to be undetected by replacing at least some of the second data the with third data, at least some of the second data being specified according to information of the newly input second data and the data amount of the third data.

The learning processing unit 113 performs learning processing and generates a model based on the preliminary training data selected by the training data selection unit 111 and the trial period data 143 for which the preliminary training data to be replaced has been selected by the replacement data selection unit 112. Specifically, the learning processing unit 113 performs the learning processing and generates a model on the basis of the attack preliminary training data 141 and the business preliminary training data 142 selected by the training data selection unit 111 in the preliminary training period. Furthermore, the learning processing unit 113 performs the learning processing and generates a model on the basis of part of the attack preliminary training data 141 and the business preliminary training data 142 selected by the training data selection unit 111 and the trial period data 143 for which the preliminary training data to be replaced has been selected by the replacement data selection unit 112 in the trial period.

In other words, the learning processing unit 113 functions as an example of a first generation unit that generates a first trained model for detecting the first data on the basis of the first data to be detected and the second data to be undetected.

Furthermore, the learning processing unit 113 functions as an example of a second generation unit that generates a second trained model for detecting the first data on the basis of the first data and the fourth data to be undetected.

The model evaluation unit 114 evaluates the performance (for example, accuracy and recall) of the model generated by the learning processing unit 113.

When the performance of the model has been evaluated to be equal to or higher than a certain level by the model evaluation unit 114, the model output unit 115 outputs the model generated by the learning processing unit 113 and stores the model in the storage device 14, for example.

FIG. 5 is a diagram for describing the outlier detection technique used in the learning device 1 illustrated in FIG. 3.

In the outlier detection technique, local density is calculated for each data point using the distance from the point to the k-th closest point. The local density is an index indicating how dense the k points near the target point are and is calculated by the following equation.

$$\text{The local density} = 1/\text{an average of distances to k neighboring points}$$

In the outlier detection technique, the larger the difference between the local density of the target point and the neighboring local density, the more the target point is treated as an outlier.

In the example illustrated in FIG. 5, point C1 is distant from neighboring points C2, C3, and C4, where k = 3. Meanwhile, the points C2, C3, and C4 are close to neighboring points. Therefore, the point C1 is selected as an outlier.

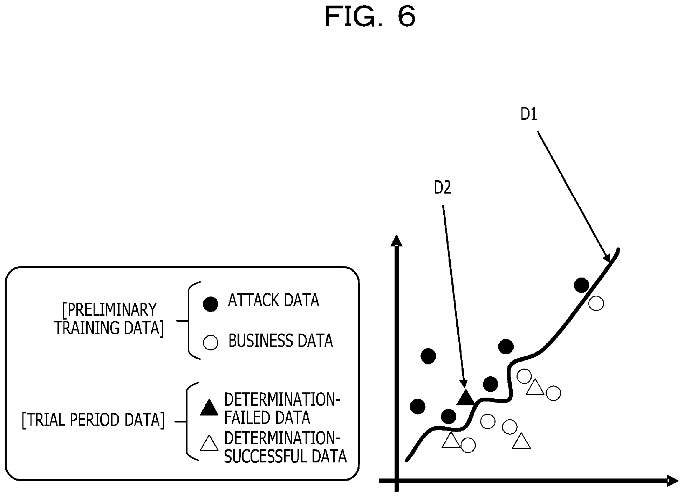

FIG. 6 is a graph illustrating distribution of preliminary training data and trial period data 143 in the learning device 1 illustrated in FIG. 3.

In FIGs. 6 to 8, the black circles represent the attack preliminary training data 141, and the white circles represent the business preliminary training data 142. Furthermore, in FIGs. 6 to 8, the black triangle marks represent the trial period data 143 failed for determination and the white triangle marks represent the trial period data 143 successful for determination.

Reference numeral D1 in FIG. 6 represents a determination boundary of a generated model. The data located left above the determination boundary is determined to be the attack communication data, and the data located right below the determination boundary is determined to be the business communication data.

Here, adding the trial period data 143 failed for determination illustrated by reference numeral D2 as the training data is assumed.

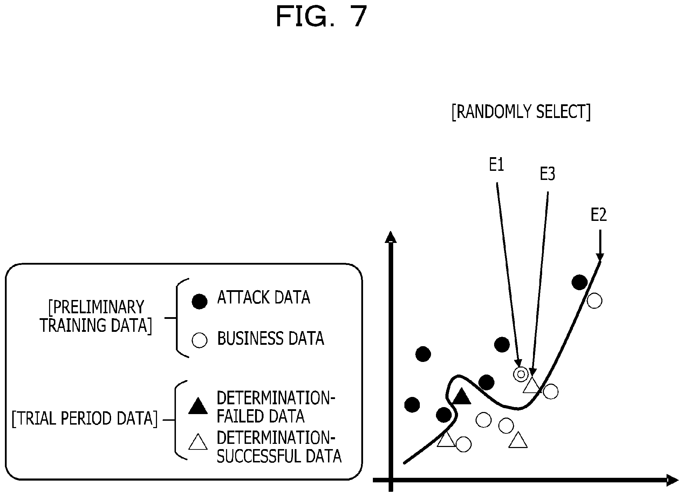

FIG. 7 is a graph for describing a case of randomly selecting replacement data in the graph illustrating distribution of the preliminary training data and the trial period data 143 illustrated in FIG. 6.

The double circled preliminary training data illustrated by reference numeral E1 in FIG. 7 is selected as the data to be replaced of the trial period data 143 failed for determination illustrated by reference numeral D2 in FIG. 6.

By replacing the training data to be used to generate a model, the determination boundary changes as illustrated by reference numeral E2 in FIG. 7 as compared with the determination boundary illustrated by reference numeral D1 in FIG. 6. As a result, the trial period data 143 illustrated by reference numeral E3 moves from right below to left above the determination boundary even though the determination was successful in the previous model, so that determination fails in the regenerated model.

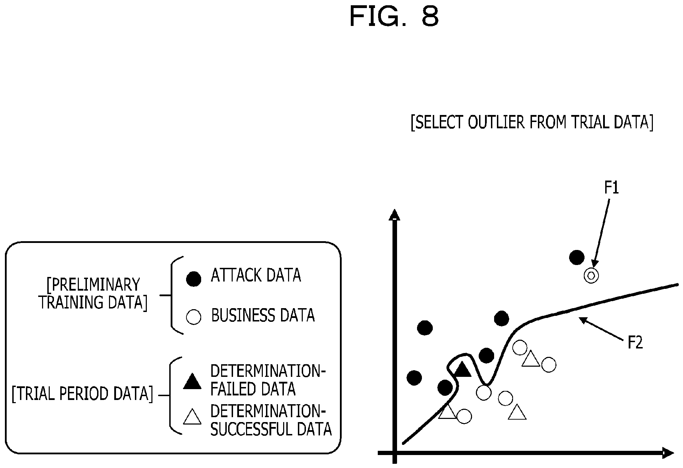

FIG. 8 is a graph for describing a case of selecting replacement data using the outlier detection technique in the graph illustrating distribution of preliminary training data and trial period data 143 illustrated in FIG. 6.

The double circled preliminary training data illustrated by reference numeral F1 in FIG. 8 is selected as the data to be replaced with the trial period data 143 failed for determination illustrated by reference numeral D2 in FIG. 6. The preliminary training data illustrated by reference numeral F1 is located at a position most deviating from the respective trial period data 143 illustrated by the black triangle marks or the white triangle marks.

As the preliminary training data illustrated by reference numeral F1 is replaced with the trial period data 143 failed for determination, the determination boundary having a fine curve in a region near communication frequently occurring in the trial period is generated as illustrated by reference numeral F2. Meanwhile, data generated around the preliminary training data illustrated by reference numeral F1 is determined as an "attack".

[B-2] Operation

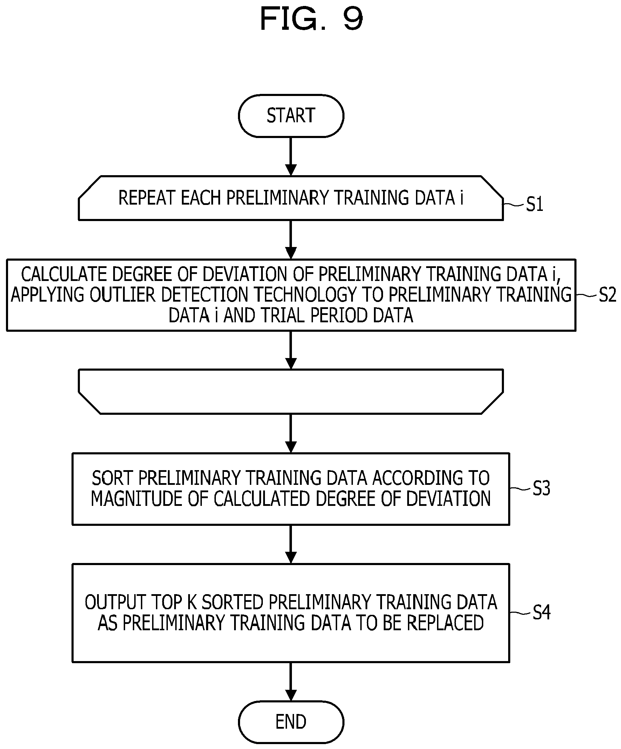

Processing of selecting the data to be replaced in the learning device 1 illustrated in FIG. 3 will be described with reference to the flowchart (steps S1 to S4) illustrated in FIG. 9.

The replacement data selection unit 112 repeatedly executes the processing illustrated in step S2 for each preliminary training data i (step S1).

The replacement data selection unit 112 applies, for example, the outlier detection technique to the preliminary training data i and the trial period data 143, and calculates the degree of deviation of the preliminary training data i.

The replacement data selection unit 112 sorts the preliminary training data according to the calculated degree of deviation (step S3).

The replacement data selection unit 112 outputs the top k sorted preliminary training data as the preliminary training data to be replaced (step S4). Then, the processing of sorting the data to be replaced is completed.

[A-3] Effect

According to the learning program, the learning device 1, and the learning method in an example of the embodiment can exert the following effects, for example.

The learning processing unit 113 generates the first trained model for detecting the first data on the basis of the first data to be detected and the second data to be undetected. The replacement data selection unit 112 specifies the information and the data amount of the third data detected as the first data by the first trained model, from the newly input second data. The replacement data selection unit 112 specifies the fourth data to be undetected by replacing at least some of the second data with the third data, at least some of the second data being specified according to the information of the newly input second data and the data amount of the third data The learning processing unit 113 generates the second trained model for detecting the first data on the basis of the first data and the fourth data.

Thereby, relearning for determining communication can be efficiently performed. Specifically, for example, the training data effective for determination can be preferentially left in relearning. Furthermore, the cost of relearning can be reduced.

The at least some of the second data to be replaced with the third data is data indicating a value most deviating from the group of the newly input second data. As a result, the training data effective for determination can be preferentially left. Furthermore, communication that rarely occurs is more likely to be determined as an attack, and a determination result as to whether communication is the attack communication data or the business communication data can be matched with the cyber security characteristic of "desiring to commit to the safe side".

The at least some of the second data to be replaced with the third data is data having the same data amount as the third data. Thereby, the data amounts of the attack communication data and the business communication data can be kept the same, so that the bias of the determination result can be suppressed.

[C] Others

The disclosed technique is not limited to the embodiment described above, and various modifications may be made without departing from the spirit of the present embodiment. Each of the configurations and processes according to the present embodiment may be selected as needed, or may be combined as appropriate.

**Claims**

1. A learning program in which a computer performs processing of:

   generating a first trained model, based on first data to be detected and second data to be undetected, for detecting the first data;
   specifying information and a data amount of third data that has been detected as the first data among newly input second data by the first trained model;
   specifying fourth data to be undetected by replacing at least part of the second data with the third data, at least part of the second data being specified according to information of the newly input second data and the data amount of the third data; and
   generating a second trained model, based on the first data and the fourth data, for detecting the first data.

2. The learning program according to claim 1, wherein
   the at least part of the second data to be replaced with the third data is data that indicates a value that deviates most from a group of the newly input second data.

3. The learning program according to claim 1 or 2, wherein
   the at least part of the second data to be replaced with the third data is data that has a same data amount as the third data.

4. A learning device comprising:

   a first generation unit configured to generate a first trained model, based on first data to be detected and second data to be undetected, for detecting the first data;
   a first specifying unit configured to specify information and a data amount of third data that has been detected as the first data among newly input second data by the first trained model;
   a second specifying unit configured to specify fourth data to be undetected by replacing at least part of the second data with the third data, the at least part of the second data being specified according to information of the newly input second data and the data amount of the third data; and
   a second generation unit configured to generate a second trained model, based on the first data and the fourth data, for detecting the first data.

5. The learning device according to claim 4, wherein
   the at least part of the second data to be replaced with the third data is data that indicates a value that deviates most from a group of the newly input second data.

6. The learning device according to claim 4 or 5, wherein
   the at least part of the second data to be replaced with the third data is data that has a same data amount as the third data.

7. A learning method comprising:

   generating a first trained model, based on first data to be detected and second data to be undetected, for detecting the first data;
   specifying information and a data amount of third data that has been detected as the first data among newly input second data by the first trained model;

specifying fourth data to be undetected by replacing at least part of the second data with the third data, the at least part of the second data being specified according to information of the newly input second data and the data amount of the third data; and

generating a second trained model, based on the first data and the fourth data, for detecting the first data.

8. The learning method according to claim 7, wherein
the at least part of the second data to be replaced with the third data is data that indicates a value that deviates most from a group of the newly input second data.

9. The learning method according to claim 7 or 8, wherein
the at least part of the second data to be replaced with the third data is data that has a same data amount as the third data.

FIG. 1

RE-TRAINING TIMING

PRELIMINARY TRAINING PERIOD (A1) | TRIAL PERIOD (A2) | TIME

ATTACK COMMUNICATION DATA
BUSINESS COMMUNICATION DATA

USE ALL (A3)

EXTRACT (A4)

ATTACK + BUSINESS

LEARN
A5

REPEAT EXTRACTION AND LEARNING (A6)

MODEL

9

## FIG. 2

RE-TRAINING TIMING

PRELIMINARY TRAINING PERIOD (B1)

TRIAL PERIOD (B3)

TIME

ATTACK COMMUNICATION DATA

BUSINESS COMMUNICATION DATA

DATA FAILED FOR DETERMINATION

USE ALL

EXTRACT

PRELIMINARY TRAINING DATA

ATTACK

BUSINESS

REPLACE DATA FAILED FOR DETERMINATION (B4)

ATTACK

BUSINESS

LEARN

MODEL

B2

B5

# FIG. 3

INFORMATION PROCESSING DEVICE

CPU 11

MEMORY UNIT 12

DISPLAY CONTROL UNIT 13

130

1

STORAGE DEVICE 14

15 INPUT I/F

EXTERNAL RECORDING MEDIUM PROCESSING UNIT 16

COMMUNICATION I/F 17

151

152

160

TO EXTERNAL DEVICE

# FIG. 4

~1

111~ TRAINING DATA SELECTION UNIT

112~ REPLACEMENT DATA SELECTION UNIT

113~ LEARNING PROCESSING UNIT

114~ MODEL EVALUATION UNIT

115~ MODEL OUTPUT UNIT

INPUT DATA

ATTACK PRELIMINARY TRAINING DATA ~141

BUSINESS PRELIMINARY TRAINING DATA ~142

TRIAL PERIOD DATA ~143

# FIG. 5

# FIG. 6

# FIG. 7

[RANDOMLY SELECT]

E1  E3

E2

[PRELIMINARY TRAINING DATA]
● ATTACK DATA
○ BUSINESS DATA

[TRIAL PERIOD DATA]
▲ DETERMINATION-FAILED DATA
△ DETERMINATION-SUCCESSFUL DATA

# FIG. 8

[SELECT OUTLIER FROM TRIAL DATA]

[PRELIMINARY TRAINING DATA]
- ● ATTACK DATA
- ○ BUSINESS DATA

[TRIAL PERIOD DATA]
- ▲ DETERMINATION-FAILED DATA
- △ DETERMINATION-SUCCESSFUL DATA

F1

F2

# FIG. 9

START

REPEAT EACH PRELIMINARY TRAINING DATA i — S1

CALCULATE DEGREE OF DEVIATION OF PRELIMINARY TRAINING DATA i, APPLYING OUTLIER DETECTION TECHNOLOGY TO PRELIMINARY TRAINING DATA i AND TRIAL PERIOD DATA — S2

SORT PRELIMINARY TRAINING DATA ACCORDING TO MAGNITUDE OF CALCULATED DEGREE OF DEVIATION — S3

OUTPUT TOP K SORTED PRELIMINARY TRAINING DATA AS PRELIMINARY TRAINING DATA TO BE REPLACED — S4

END

Europäisches Patentamt

European Patent Office

Office européen des brevets

# EUROPEAN SEARCH REPORT

Application Number

EP 21 17 7103

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/081969 A1 (PHADKE CHITRA [US] ET AL) 14 March 2019 (2019-03-14) * paragraph [0020] - paragraph [0040]; figure 2 * | 1-9 | INV.<br>G06F21/55<br>H04L29/06 |
| A | US 2019/102554 A1 (LUO PENGCHENG [US] ET AL) 4 April 2019 (2019-04-04) * paragraph [0020] - paragraph [0042] * | 1-9 | |
| A | US 2018/165597 A1 (JORDAN EAMON HIRATA [US] ET AL) 14 June 2018 (2018-06-14) * paragraph [0012] - paragraph [0027] * | 1-9 | |

TECHNICAL FIELDS
SEARCHED (IPC)

G06F
H04L

The present search report has been drawn up for all claims

| Place of search | Date of completion of the search | Examiner |
|---|---|---|
| Munich | 20 October 2021 | Jardak, Christine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 17 7103

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2021

| Patent document cited in search report | Publication date | Patent family member(s) | Publication date |
|---|---|---|---|
| US 2019081969 A1 | 14-03-2019 | US 2019081969 A1<br>WO 2019055264 A1 | 14-03-2019<br>21-03-2019 |
| US 2019102554 A1 | 04-04-2019 | NONE | |
| US 2018165597 A1 | 14-06-2018 | US 2018165597 A1<br>US 2020356904 A1<br>US 2020364620 A1 | 14-06-2018<br>12-11-2020<br>19-11-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190034836 A
- JP 2006285489 A

- JP 7219921 A